# EUROPEAN PATENT SPECIFICATION

(11) **EP 2 289 661 B1**
(45) Date of publication and mention of the grant of the patent: **02.04.2014**
(21) Application number: 09168800.2
(22) Date of filing: 27.08.2009
(51) Int. Cl.: B23K 35/02, B23K 35/30, B23K 35/36, B23K 35/362, B23K 9/23, C22C 38/04, C22C 38/08

(54) **Flux cored wire for gas shielded arc welding of high strength steel**
Fülldrahtelektrode zum gasgeschützten Pulverschweißen von starkem Stahl
Fil à flux incorporé pour soudure à l'arc protégée en acier de grande résistance

(43) Date of publication of application: 02.03.2011
(73) Proprietor: Nippon Steel & Sumikin Welding Co., Ltd., Tokyo 104-0045 (JP)
(72) Inventor: Shimura, Ryuichi, Tokyo Tokyo 104-0045 (JP); Hasegawa, Toshiei, Tokyo Tokyo 100-8071 (JP); Kojima, Kazuhiro, Tokyo Tokyo 100-8071 (JP); Kasuya, Tadashi, Tokyo Tokyo 100-8071 (JP)
(74) Representative: Vossius & Partner

(56) References cited:
- EP-A1- 1 707 303
- EP-A1- 2 067 566
- EP-A2- 2 110 195
- FR-A1- 2 872 724
- US-A1- 2002 003 135
- US-A1- 2003 116 550

## Description

The present invention relates to a seamless flux cored wire for gas shielded arc welding of high-strength steel having a proof stress of 690MPa or more in building machines, offshore structures, and the like, and particularly relates to a flux cored wire for welding of high-strength steel which is capable of conducting all-position welding and providing an excellent cracking resistance.

For arc welding of high-strength steels to be mainly used in construction machines, offshore structures, and the like, there have been adopted: covered electrode, submerged arc welding, and gas shielded arc welding using a solid wire, and the like, providing excellent impact toughness. Among them, it is general to adopt the covered electrode, or the gas shielded arc welding used a solid wire in case of which necessitate positional welding such as vertical, overhead, and horizontal.

However, the covered electrode is low in welding efficiency, and the gas shielded arc welding using a solid wire is also difficult in achieving highly efficient welding because the gas shielded arc welding is required to be conducted with low welding current so as to prevent molten metal sagging in the positional welding.

On the other hand, for all-position welding of typical low-strength steels having proof stresses less than 690MPa, the gas shielded arc welding using a flux cored wire is adopted in most cases.

In case of the gas shielded arc welding using a flux cored wire, a slag component having a high melting point added in the cored wire solidifies upon welding in advance of a weld metal to thereby hold the weld metal, so that metal sagging is rarely caused even by positional welding such as vertical upward welding, thereby enabling to weld with a high welding current, i.e., highly depositional welding with a higher efficiency.

However, it has been difficult to adopt the gas shielded arc welding using a flux cored wire of high-strength steels, because a slag component to be generally added into the flux cored wire is mainly constituted of oxides, so that obtainment of an impact toughness is more difficult than other welding processes, and an amount of diffusible hydrogen such as resulting from moisture contained in a flux material and resulting from moisture absorption during storage of the flux cored wire is larger than that resulting of the solid wire.

Further, various developments have been progressed in flux cored wires for gas shielded arc welding of high-strength steel, for example, metal-based flux cored wires without addition of slag components have been disclosed in JP2006-198630A and JP2007-144516A. However, these flux cored wires are focused on flat position welding, so that all-position welding based on the flux cored wires are required to be conducted at low welding current so as to prevent the molten metal sagging, similarly to the gas shielded arc welding using solid wire.

Moreover, concerning flux cored wires for gas shielded arc welding of high-strength steels for all position, although JP09-253886A and JP03-047695A disclose flux cored wires for providing improved low-temperature toughness by virtue of decrease of an amount of oxygen in a welded metal by adding metal fluorides, basic oxides, or the like into slag components including rutile as a main component, these flux cored wires are not considered about cracking resistance of the weld metal.

EP-A-1 707 303 discloses a low alloy steel weld metal and flux cored wire having improved toughness when assembling components by performing gas shielded arc welding of a low temperature steel by satisfying the equation: ([C]×[Mn]×[Ti]/([Si] ×[O])=0.20 to 0.60 in order to prevent occurrence of ferrite side plates at the prior austenite grain boundary in the columnar structure of the weld metal.

US 2003/0116550 A discloses a basic flux cored wire with excellent weldability and excellent in crack resistance and low temperature toughness, and exhibits excellent welding workability in all welding positions, ensuring an improvement in the efficiency of welding work, using Ar/CO₂ mixed gas or 100% CO₂ as a shield gas.

It is therefore an object of the present invention to provide a seamless flux cored wire for gas shielded arc welding to be used for high-strength steels having a proof stress of 690MPa or more, which is capable of all-position welding with a higher efficiency and exhibits an excellent cracking resistance.

The object above can be achieved by the features specified in the claims. Particularly, the aspect of present invention for achieving the above object is summarized as follows.

(1) A seamless flux cored wire for gas shielded arc welding of high-strength steel comprising a steel sheath, and a flux filled therein, wherein the flux cored wire comprises, by mass% with respect to the total mass of the flux cored wire:
   C: 0.03 to 0.10%,
   Si: 0.25 to 0.7%,
   Mn: 1.0 to 3.0%,
   Ni: 1.0 to 3.5%,
   B: 0.001 to 0.015%,
   Cr: limited to 0.05% or less, and
   Al: limited to 0.05% or less, and
   in the flux,
   TiO₂: 2.5 to 7.5%,
   SiO₂: 0.1 to 0.5%,
   ZrO₂: 0.2 to 0.9%,
   Al₂O₃: 0.1 to 0.4%, optionally one or more of:
   Mo: 0.1 to 1.0%,
   Nb: 0.01 to 0.05%,
   V: 0.01 to 0.05%,
   Ti: 0.1 to 1.0%;
   Mg: 0.01 to 0.9%;
   Ca: 0.01 to 0.5%; and
   REM: 0.01 to 0.5%, and
   the remainder comprising: Fe, an arc stabilizer, and unavoidable impurities; and
   wherein the total amount of hydrogen in the seamless flux cored wire is in 15ppm or less.

According to the seamless flux cored wire for gas shielded arc welding of high-strength steel of the present invention, it becomes possible, in welding of high-strength steels having a proof stress of 690MPa or more, to exemplarily enable all-position welding with a higher efficiency and to provide the weld metal having an excellent cracking resistance and an excellent low-temperature toughness, to thereby improve the welding efficiency and the weld metal quality, as compared to a covered electrode and a gas shielded arc welding using a solid wire.

The present inventors have carried out various studies and investigations to obtain wire components in flux cored wires for all-position welding, so as to ensure mechanical properties of welded metal for high-strength steel having a proof stress of 690MPa or more, such as tensile strengths, impact toughness, and so as to achieve excellent cracking resistances of the welded metals.

As a result, the present inventors have found out such mechanical properties and resistances can be simultaneously established, by finding out optimum addition amounts of alloy components including rutile as a main component in slag components for all-position welding, and by further decreasing a total amount of hydrogen in the wire to 15ppm or less so as to improve the cracking resistance.

Described below are reasons of limitation of the components and the like of the seamless flux cored wire for gas shielded arc welding of high-strength steel according to the present invention.

### [C: 0.03 to 0.10 mass%]

C is an important element for ensuring the strength of the weld metal by solid solution strengthening. If the total amount of C component in the steel sheath and a flux ("total amount of applicable element component" will be referred to as "wire component" hereinafter) is less than 0.03 mass% (hereinafter referred to as simply "%"), the effect for ensuring the strength of above-described is not obtained, and if C in the wire component exceeds 0.10%, lead to yields of excessive C in the welded metal to excessively increase proof stresses and strengths thereof, thereby decreasing toughness thereof.

### [Si: 0.25 to 0.7%]

Si is added for the purpose of improving toughness of the weld metal. If Si in the wire component is less than 0.25%, toughness decreases. On the other hand, if Si in the wire component exceeds 0.7%, slag formation amount increases, thereby slag inclusion defect causes in case of multi-layer welding. Further, yield of Si in the welded metal is made excessive, then strength excessively increases, thereby decreasing toughness thereof.

### [Mn: 1.0 to 3.0%]

Mn is added for the purpose of ensuring toughness of the welded metal and improving strength and proof stress. If Mn in the wire component is less than 1.0%, toughness decreases. On the other hand, if Mn in the component exceeds 3.0%, slag formation amount increases, thereby causing slag inclusion defect in case of multi-layer welding. Further, yield of Mn in the welded metal is also made excessive, then strength excessively increases, thereby decreasing toughness thereof.

### [Ni: 1.0 to 3.5%]

Ni is added for the purpose of improving strength and toughness of a welded metal. If Ni in the wire component is less than 1.0%, the effect is insufficient thereof, and if Ni in the component exceeds 3.5%, the strength excessively increases, toughness decrease.

### [B: 0.001 to 0.015%]

B is added in a small amount, to enhance a hardenability of the welded metal and to improve strength and low-temperature toughness of the welded metal. If B is less than 0.001%, the effect is insufficient thereof, and if B exceeds 0.015%, the strength is excessive, low temperature toughness decreases. Note that the effect of B can be exhibited by any simple metal substance, alloy, and oxide of B, so that the form of B to add into the flux is arbitrary.

### [Cr: 0.05% or less]

Cr is limited to 0.05% or less, because, although Cr has an effect for forming Cr-carbide in the welded metal and thereby improving the strength thereof, Cr conversely functions to decrease low temperature toughness thereof.

### [Al: 0.05% or less]

Al is limited to 0.05% or less, because, although A1 exhibits an effect as a deoxidizer which bonds to dissolved oxygen in a molten pool, floating of a slag formed aluminum oxide tends to become insufficient in case of a condition of a relatively low heat input in the gas shielded arc welding using the flux cored wire, such that the oxide is left as a non metal inclusion in the weld metal, toughness decreases.

### [TiO₂: 2.5 to 7.5%]

TiO₂ is an arc stabilizer, and is a main one of slag components. TiO₂ functions to encapsulate the welded metal upon welding to thereby shield it from the atmosphere, and to properly keep bead shape by virtue of an appropriate viscosity, and particularly, TiO₂ largely affects sagging properties of molten metal depending on the balance between TiO₂ and other metal components in case of vertical upward welding. If TiO₂ is less than 2.5%, metal sagging easily occurs in vertical upward welding, so that all-position welding is made difficult. On the other hand, if TiO₂ exceeds 7.5%, the amount of slag becomes exemplarily excessive, so that slag inclusion occurs and metallic inclusions increase, thereby decreasing the toughness.

### [SiO₂: 0.1 to 0.5%]

SiO₂ enhances a viscosity of molten slag, thereby improving an encapsulating ability of the slag. If SiO₂ is less than 0.1%, viscosity of the molten slag is insufficient, and thereby encapsulating ability of slag becomes insufficient, so that a metal sagging is caused in vertical upward welding. On the other hand, if SiO₂ exceeds 0.5%, the viscosity of molten slag becomes excessive, thereby deteriorating slag removability and bead shape.

### [ZrO₂: 0.2 to 0.9%]

ZrO₂ has a function to adjust a viscosity and a solidification temperature of the molten slag, and thereby enhancing an encapsulating ability of the slag. If ZrO₂ is less than 0.2%, the effect is insufficient thereof, thereby easily causing a metal sagging in vertical upward welding. On the other hand, if ZrO₂ exceeds 0.9%, the bead shape becomes convex, thereby easily causing a slag inclusion, a lack of fusion, and the like.

### [Al₂O₃: 0.1 to 0.4%]

Similarly to ZrO₂, Al₂O₃ has a function to adjust a viscosity and a solidification temperature of the molten slag, thereby enhancing an encapsulating ability of the slag. If Al₂O₃ is less than 0.1%, the effect is insufficient thereof, thereby causing a metal sagging in vertical upward welding. On the other' hand, if Al₂O₃ exceeds 0.4%, the bead shape becomes convex, thereby easily causing the slag inclusion, the lack of fusion, and the like.

### [Total amount of hydrogen in wire: 15ppm or less]

It is possible to measure an amount of hydrogen in the cored wire, such as by the inert gas fusion thermal conductivity detection method. Further, it is required to decrease an amount of hydrogen in the cored wire as less as possible, because such hydrogen becomes a source of diffusible hydrogen in a welded metal. If the amount of hydrogen in the wire exceeds 15ppm, the amount of diffusible hydrogen (JIS Z3118) exceeds 4ml/100g, such that the welded metals of high-strength steels are increased in sensitivity of cold cracking.

Note that total amount of hydrogen in the seamless flux cored wire can be decreased, by selecting a filling flux having a lower hydrogen content, and by annealing (650 to 950°C) after flux filling.

### [Mo: 0.1 to 1.0%; Nb: 0.01 to 0.05%; and V: 0.01 to 0.05%]

Mo, Nb, and V are each added for the purpose of improving proof stress and strength of the welded metal. Although these are elements which are added into a wire by selecting one or more of them, if amount of these elements exceed the defined upper limits of 1.0% for Mo, 0.05% for Nb, and 0.05% for V, strengths of the welded metal are excessive, thereby decreasing toughness thereof.

Further, if amount of one or more of Mo is less than 0.1%, Nb is less than 0.01%, and V is less than 0.01%, the effects for improving proof stress and strength of the welded metal cannot be obtain.

### [Ti: 0.1 to 1.0%; Mg: 0.01 to 0.9%; Ca: 0.01 to 0.5%; and REM: 0.01 to 0.5%]

Ti, Mg, Ca, and REM are each added as a deoxidizer for decreasing an oxygen amount in the welded metal to thereby improve toughness thereof. Although these are elements which are added into a wire by selecting one or more of them, if amount of these exceeds the defined upper limit of 1.0% for Ti, 0.9% for Mg, 0.5% for Ca, and 0.5% for REM, reacts intensely with oxygen within arc thereof, thereby increasing generation of spatter, fume, and the like.

Further, if amount of Ti is less than 0.1%, Mg is less than 0.01%, Ca is less than 0.01%, and REM is less than 0.01%, the effect as deoxidizer for decreasing an oxygen amount in the welded metal to thereby improve the toughness thereof cannot be obtained.

Note that blending amounts of alloy components in a flux are adjusted within the defined ranges, respectively, in consideration of components in a steel sheath and content thereof. Adjusting alloy components in the flux allows for provision of a seamless flux cored wire adapted to components of various high-strength steels (parent material).

Further, since both P and S produce compounds having a low melting point which decrease strength of grain boundaries, and decrease the toughness of the weld metal, P and S are limited to 0.015% or less and 0.010% or less, respectively, in amount as small as possible. Moreover, although iron powder can be used to adjust flux filling rate to 10 to 20%, lower flux filling rate and smaller addition amount of iron powder are desirable because iron powder take oxygen of the welded metal.

As other components in wires include: Fe, in the steel sheath, and the iron powder added into a flux, and alloy components; Na₂O, K₂O, NaF, K₂SiF₆, K₂ZrF₆, Na₃AlF₆, MgF₂, or the like, as arc stabilizers comprising oxides and fluoride of alkali metals, and oxide and fluoride of alkaline earth metals and Cu in case of Cu plating treatment on to a wire surface, which is effective for rust prevention, electro conductivity achievement, and resistance to contact tip abrasion.

Flux cored wires each have a structure forming a steel sheath into a pipe shape and the flux filled in the steel sheath, and the flux cored wires can be generally classified into: seamless wire each comprising a steel sheath, which sheath is formed in a manufacturing process, and is closed by welding without a slit-like seam exhibiting a risk of outside air penetration; and wire having slit-like gap without by welding, respectively. According to the present invention the seamless type of wire comprising a steel sheath without a slit-like seam exhibiting the risk of outside air penetration is applied to decrease a diffusible hydrogen amount and to thereby improve the cracking resistance, because such the seamless type flux cored wire can be subjected to heat treatment so as to decrease a total amount of hydrogen in the wire and such the seamless wire is free of moisture absorption after manufacturing.

The wire of the present invention is allowed to have a diameter within the range of 1.0 to 2.0mm, and preferably within a range of 1.2 to 1.6mm, for enabling to increase welding current density on welding and to thereby obtaining higher deposition efficiency.

Further, it is preferable to use a mixed gas comprising Ar and 5 to 25% CO₂, as a shielding gas upon welding, so as to decrease an oxygen amount in a welded metal.

### Examples

Effects of the present invention will be explained hereinafter more concretely, based on examples.

The flux cored wires were manufactured by way of trial, steel sheaths were formed into "U" shape in a forming process, respectively; flux of various component was filled into them, respectively; the steel sheath was further formed into "O" shape in a manner to be made into seamless wire (pipe) each comprising the applicable steel sheath closed by welding without the slit-like seam exhibiting a risk of outside air penetration, and into wire having slit-like gap without by welding, respectively; and which each has a wire diameter of 1.2mm as listed in Table 1 and Table 2. All these examples adopted the same steel for steel sheath of all the experimentally produced the flux cored wires. The chemical composition of the steel sheath comprises, by mass%, C: 0.03%, Si: 0.25%, Mn: 0.4%, P: 0.003%, S: 0.002%, and a remainder comprising iron and unavoidable impurities. Namely, those elements lacking in the chemical composition were added by flux, thereby experimentally producing the flux cored wires having the wire component listed in Table 1 and Table 2 by way of trial. However, the present invention is not limited to only such a situation that alloy elements such as Ni are added in the flux. Namely, it is even enough for the present invention that an amount of the applicable alloy elements such as Ni are within the range defined by the present invention with respect to the total mass of the flux cored wire, when the alloy elements are already added in the steel sheath.

The flux cored wires were annealed at 600 to 950°C in the process of wire manufacturing; and in case of annealing those wires having slit-like gap, annealing was performed in an atmosphere of Ar gas so as to prevent that the filled flux in the wires were contacted with the atmosphere through the gap. Further, after production of the wires, the wires were encapsulated into vinyl-made packs so as to prevent moisture absorption by the flux, and were stored in such a state until just before commencement of welding.

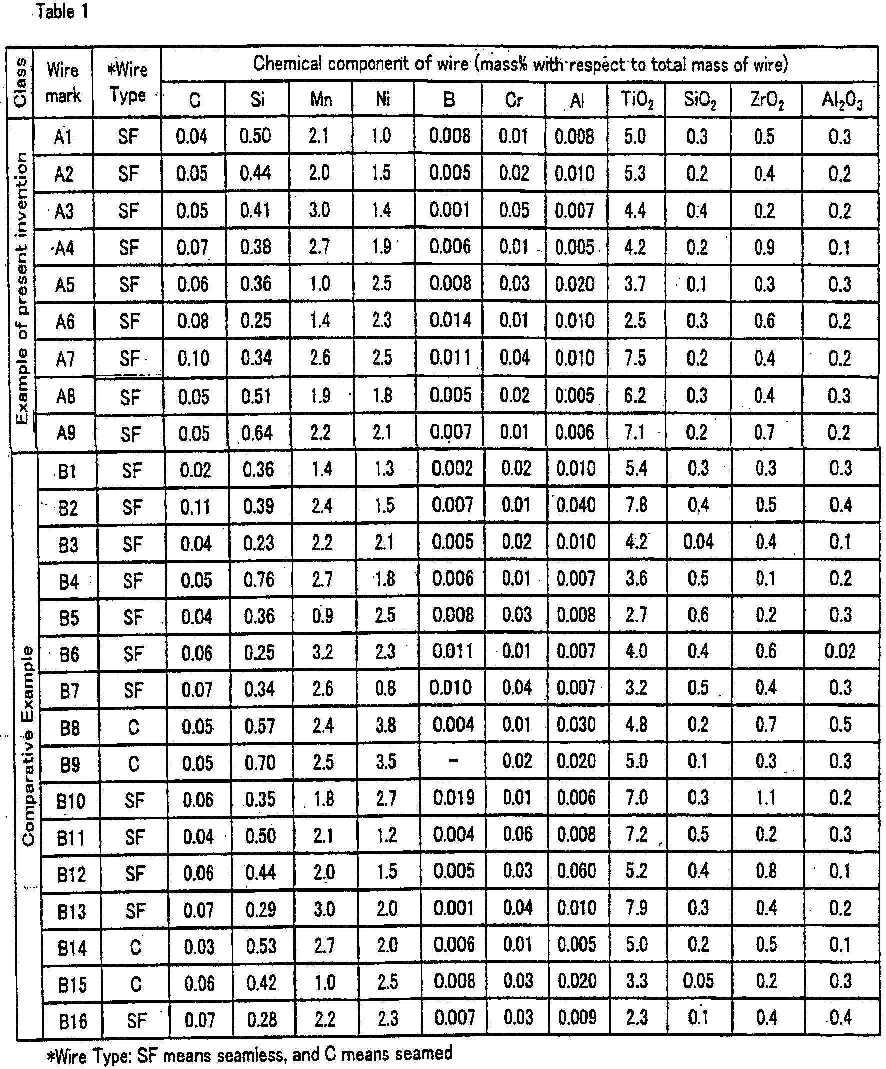

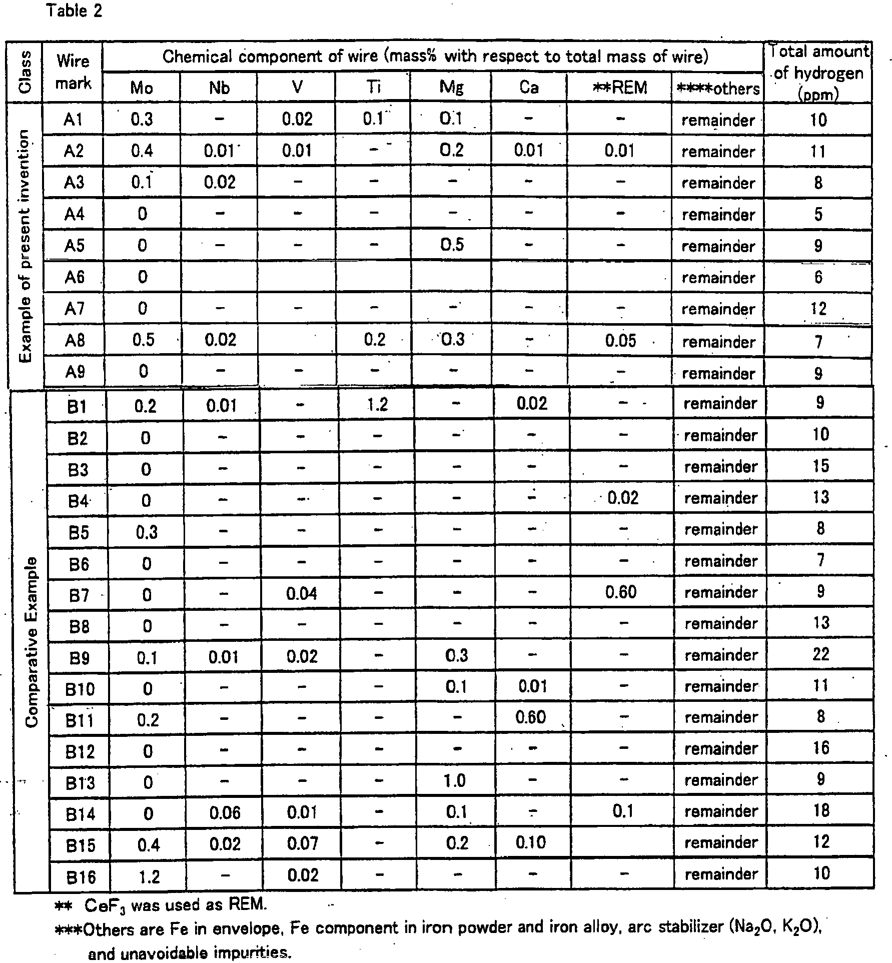

Using the experimentally produced wires, the total amount of hydrogen was measured by the hydrogen analyzer: EMGA-621 manufactured by HORIBA, Ltd., and thereafter an evaluation of welding workability and a deposited metal test were executed, based on vertical upward fillet welding using steel plates prescribed in JIS G3128 SHY685. Further, those steel plates, which were excellent in welding workability in vertical upward fillet welding, were subjected to a cracking test. These welding conditions are collectively listed in Table 3.

**Table 3**

| Test item | Plate thickness (mm) | Groove shape | Welding current (A) | Arc Voltage (V) | Welding speed (cm/min) | Preheating/interpass temperature (deg.C) | Shield gas flow rate |
|---|---|---|---|---|---|---|---|
| Welding workability test | 12.7 | T-joint | 210 | 22 | about 10 | Preheating: 100 | 80%Ar- 20%CO₂ 25 liter/min |
| Deposited metal test | 20 | Gap: 12mm | 270 | 28 | 25 | Preheating: 100 | |
| | | 45deg. Groove | | | | Interpass: 150 | |
| Cracking test | 40 | Single side 20deg. U-groove | 240 | 25 | 24 | 75 | |

The vertical upward fillet welding was performed by semi-automatic welding, and investigations were conducted for metal sagging, spatter generation state, slag removability, and bead shape, followed by investigation of presence/absence of slag inclusion defects by collecting five macroscopic cross-sections.

In the deposited metal test, a tensile test specimen (JIS Z3111 No.A1) and a impact test specimen (JIS Z3111 No.4) were collected from a central portion of each deposited metal in its thickness direction, and subjected to the tests respectively. Mechanical properties were evaluated to be acceptable, for 0.2% proof stresses of 690MPa or more, and for absorbed energies of 47J or more at the test temperature of -40°C.

The cracking test was performed in conformity to an U-groove weld cracking test method (JIS Z3257). Further, the specimen passed over 48 hours after welding was investigated for presence/absence of surface crack and cross-section cracks (five cross sections), by a penetrant testing (JIS Z2343). The results thereof are collectively listed in Table 4.

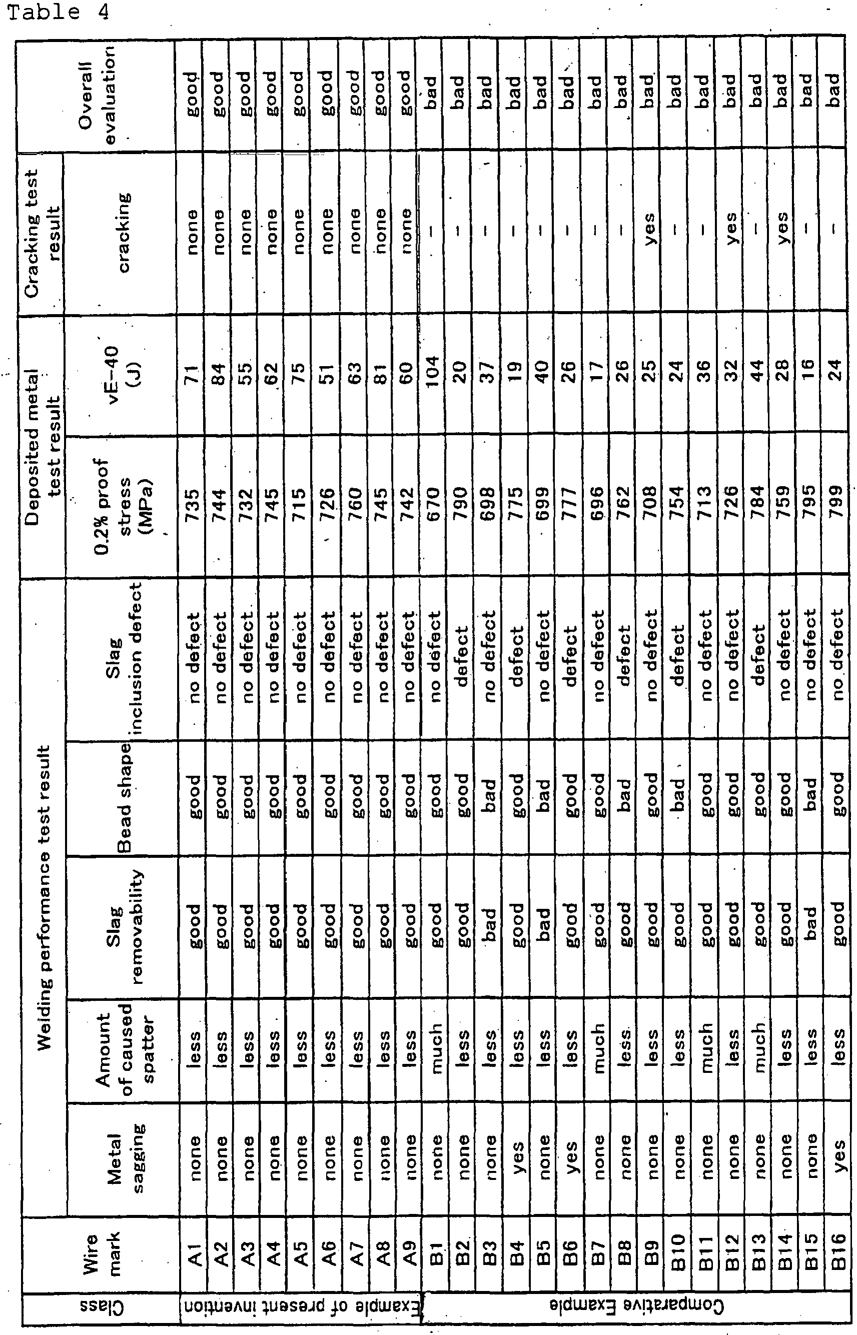

In Table 1, Table 2, and Table 4, wires marks A1 to A9 are the Examples of the present invention respectively, and wires marks B1 to B16 are Comparative Examples respectively.

The wires as Examples of the present invention designated by wire A1 to A9 respectively, were appropriate in amounts of C, Si, Mn, Ni, B, Cr, Al, TiO₂, SiO₂, ZrO₂, and Al₂O₃ and in total amount of hydrogen, and were also appropriate in amounts of one or more of Mo, Nb, and V, and in amount of one or more of Ti, Mg, Ca, and REM, so that these wires were excellent in welding workability and allowed for obtainment of excellent values for proof stresses and absorbed energies of the deposited metals, without occurrence of cold cracks, thereby providing extremely satisfactory results.

The wire B1 in Comparative Example was much in Ti, and thus an amount of spatter was large. Further, this wire was less in C, and thus had a lower value of 0.2% proof stress.

The wire B2 was much in TiO₂, and thus occurred of slag inclusion defects. Further, this wire was much in C, and thus had a higher value of 0.2% proof stress and a lower value of absorbed energy.

The wire B3 was less in SiO₂, and was defective in slag removability and bead shape. Further, this wire was less in Si, and thus had a lower value of absorbed energy.

The wire B4 was less in ZrO₂, and thus occurred of metal sagging. Further, this wire was much in Si, and thus occurred of slag inclusion defect and also had a lower value of absorbed energy.

The wire B5 was much in SiO₂, and was defective in slag removability and bead shape. Further, this wire was less in Mn, and thus had a lower value of absorbed energy.

The wire B6 was less in Al₂O₃, and thus occurred of metal sagging. Further, this wire was much in Mn, and thus occurred of slag inclusion defects and had a higher value of 0.2% proof stress and a lower value of absorbed energy.

The wire B7 was much in REM, and thus resulted in an increased amount of caused spatter. Further, this wire was less in Ni, and thus had a lower value of absorbed energy.

The wire B8 was much in Al₂O₃, and thus was defective in bead shape and occurred of slag inclusion defects. Further, this wire was much in Ni, and thus had a higher value of 0.2% proof stress and a lower value of absorbed energy.

The wire B9 was less in B, and thus had a lower value of absorbed energy. Further, this wire was much in total amount of hydrogen, and thus occurred of cracking.

The wire B10 was much in ZrO₂, and thus was defective in bead shape and occurred of slag inclusion defect. Further, this wire was much in B, and thus had a higher value of 0.2% proof stress and a lower value of absorbed energy.

The wire B11 was much in Ca, and thus resulted in an increased amount of caused spatter. Further, this wire was much in Cr, and thus had a lower value of absorbed energy.

The wire B12 was much in Al, and thus had a lower value of absorbed energy. Further, this wire was much in total amount of hydrogen, and thus occurred of cracking.

The wire B13 was much in Mg, and thus resulted in an increased amount of caused spatter. Further, this wire was much in TiO₂, and thus occurred of a slag inclusion defects and also had a lower value of absorbed energy.

The wire B14 was much in Nb, and thus had a higher value of 0.2% proof stress and a lower value of absorbed energy. Further, this wire was much in total amount of hydrogen, and thus occurred of cracking.

The wire B15 was less in SiO₂, and was thus defective in slag removability and bead shape. Further, this wire was much in V, and thus had a higher value of 0.2% proof stress and a lower value of absorbed energy.

The wire B16 was less in TiO₂, and thus occurred of metal sagging. Further, this wire was much in Mo, and thus had a higher value of 0.2% proof stress and a lower value of absorbed energy.

## Claims

1. A seamless flux cored wire for gas shielded arc welding of high-strength steel comprising a steel sheath, and a flux filled therein, wherein the flux cored wire comprises, by mass% with respect to the total mass of the flux cored wire:
C: 0.03 to 0.10%,
Si: 0.25 to 0.7%,
Mn: 1.0 to 3.0%,
Ni: 1.0 to 3.5%,
B: 0.001 to 0.015%,
Cr: limited to 0.05% or less, and
Al: limited to 0.05% or less, and
in the flux,
TiO₂: 2.5 to 7.5%,
SiO₂: 0.1 to 0.5%,
ZrO₂: 0.2 to 0.9%, and
Al₂O₃: 0.1 to 0.4%, optionally one or more of:
Mo: 0.1 to 1.0%,
Nb: 0.01 to 0.05%,
V: 0.01 to 0.05%,
Ti: 0.1 to 1.0%;
Mg: 0.01 to 0.9%;
Ca: 0.01 to 0.5%; and
REM: 0.01 to 0.5%, and
the remainder comprising: Fe, arc stabilizer, and unavoidable impurities; and
wherein the total amount of hydrogen in the seamless flux cored wire is 15ppm or less.

## Patentansprüche

1. Nahtloser Fülldraht zum Schutzgasschweißen von hochfestem Stahl, der eine Stahlhülse und ein darin eingefülltes Flussmittel aufweist, wobei der Fülldraht bezogen auf die Gesamtmasse des Fülldrahts in Masse-% aufweist: 0,03 bis 0,10 % C,
0,25 bis 0,7 % Si,
1,0 bis 3,0 % Mn,
1,0 bis 3,5 % Ni,
0,001 bis 0,015 % B,
höchstens 0,05 % Cr und
höchstens 0,05 % Al und
im Flussmittel:
2,5 bis 7,5 % TiO₂,
0,1 bis 0,5 % SiO₂,
0,2 bis 0,9 % ZrO₂ und
0,1 bis 0,4 % Al₂O₃, optional einen oder mehrere Bestandteile aus:
0,1 bis 1,0 % Mo,
0,01 bis 0,05 % Nb,
0,01 bis 0,05 % V,
0,1 bis 1,0 % Ti;
0,01 bis 0,9 % Mg;
0,01 bis 0,5 % Ca; und
0,01 bis 0,5 % SEM, und
wobei der Rest Fe, Lichtbogenstabilisator und unvermeidliche Verunreinigungen aufweist; und
wobei die Gesamtmenge von Wasserstoff in dem nahtlosen Fülldraht höchstens 15 ppm beträgt.

## Revendications

1. Fil fourré sans soudure pour soudage à l'arc sous gaz protecteur d'acier à résistance élevée, comportant une gaine en acier remplie d'un fondant, ledit fil fourré comprenant, en pourcentage massique par rapport à la masse totale du fil fourré :
C : de 0,03 à 0,10%,
Si : de 0,25 à 0,7%,
Mn: de 1,0 à 3,0%,
Ni : de 1,0 à 3,5%,
B : 0,001 à 0,015%,
Cr : limité à 0,05% ou moins, et
Al : limité à 0,05% ou moins, et
dans le fondant,
TiO₂ : de 2,5 à 7,5%,
SiO₂ : de 0, 1 à 0,5%,
ZrO₂ : de 0,2 à 0,9%, et
Al₂O₃ : de 0,1 à 0,4%, en option un ou plusieurs des éléments suivants :
Mo : de 0,1 à 1,0%,
Nb: de 0,01 à 0,05%,
V: de 0,01 à 0,05%,
Ti : de 0,1 à 1,0% ;
Mg : de 0,01 à 0,9% ;
Ca : de 0,01 à 0,5% ; et
REM : de 0,01 à 0,5%, et
le reste étant composé de : Fe, stabilisateur d'arc, et d'impuretés inévitables ; et
la teneur totale d'hydrogène dans ledit fil fourré sans soudure étant égale ou inférieure à 15 ppm.
